# EUROPEAN PATENT SPECIFICATION

(11) **EP 0 511 027 B1**
(45) Date of publication and mention of the grant of the patent: **05.03.1997**
(21) Application number: 92303789.9
(22) Date of filing: 27.04.1992
(51) Int. Cl.: G06K 11/16

(54) **Coordinate reading system**
Koordinatenablesesystem
Système pour la lecture de coordonnées

(30) Priority: 26.04.1991 JP 97597/91; 26.04.1991 JP 97599/91; 07.06.1991 JP 136855/91
(43) Date of publication of application: 28.10.1992
(73) Proprietor: SEIKO INSTRUMENTS INC., Tokyo 136 (JP)
(72) Inventor: Morita, Yoshiyuki, Tokyo (JP)
(74) Representative: Sturt, Clifford Mark

(56) References cited:
- EP-A- 0 326 396
- EP-A- 0 399 906
- US-A- 4 029 899
- US-A- 4 952 757

## Description

The present invention relates to a coordinate reading system for inputting coordinates to an external device such as a computer.

Known prior art coordinate reading systems include Japanese Patent Publication Nos. 52/96825 and 55-96411 for which the applicant is also the applicant of the present invention. A brief description will be made hereafter about these coordinate reading systems.

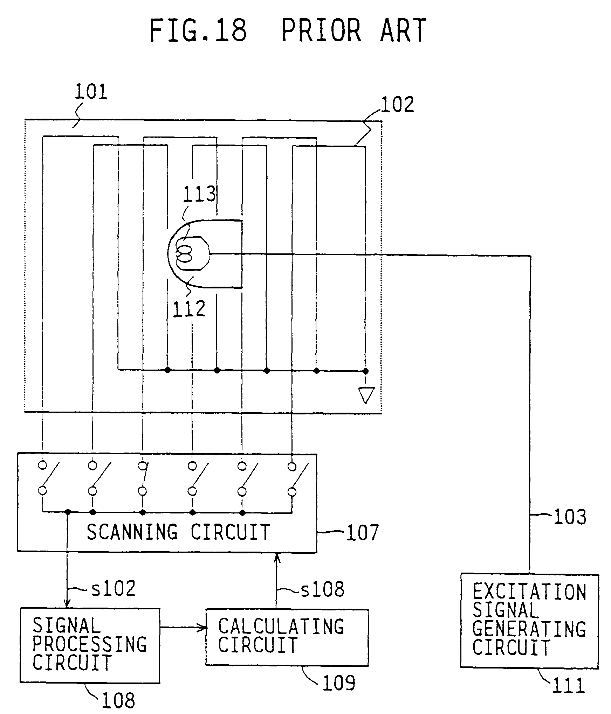

Fig. 18 is a diagram illustrating the structure of such prior art coordinate reading system. A plurality of loop-shaped loop line groups 102 are laid on a tablet 101, known as a coordinate reading plate. These loop line groups 102 are selected one by one by a scanning circuit 107. The output of the scanning circuit 107 is connected to a signal processing circuit 108 and its output is further connected to a control circuit 109. The control circuit 109 provides scanning signals s108 for selecting the loop line groups 102 sequentially in the scanning circuit 107. A coil 113 is contained in a coordinate indicator 112 and is connected to an excitation signal generating circuit 111 contained in the main body of the coordinate reading system by an excitation signal cable 103.

In the coordinate reading system constructed as described above, coordinate values are calculated as follows:

The coordinate indicator 112 is placed on the loop line groups 102. On supplying the signal from the excitation signal generating circuit 111 to the coordinate indicator, an AC magnetic field is generated. The control circuit 109 generates the scanning signal s108 and sequentially selects switches in the scanning circuit 107. This operation is called "scanning". Signals are induced in the loop line group 102 corresponding to the position of the coordinate indicator 112. The induced signal s102 per each loop line is sequentially inputted to the signal processing circuit 108 by the scanning circuit 107 selecting each loop line group 102. The signal processing circuit 108 generates waveforms in the form of envelopes of these induction signals. The control circuit 109 finds the coordinate values by inputting the amplitude of the induced signal per each loop line from this envelope waveform and by comparing and computing the amplitudes.

Accordingly, the prior art coordinate reading system is characterised in that it observes induced signals by scanning many numbers of loop line groups.

In this type of prior art coordinate reading system many numbers of electronic switches, such as analog switches are used for the scanning circuit to scan the whole tablet surface. This has been found to increase the cost of manufacturing such coordinate reading systems. Moreover, there is the problem that many loop lines have to be switched in order to detect the induced signals and the speed for detecting the position is therefore limited.

US-A-4 952 757 discloses a co-ordinate reading system which has a plurality of separate triangular sense lines. Each triangular sense line is coupled to a multiplexer and other circuitry in order to detect the position of an electromagnetic head which is moved over the sense lines.

US-A-4 029 899 discloses a co-ordinate reading system which employs senses lines each having a plurality of rectangular sense line parts. Because the strength of the signal induced in each rectangular sense line part is not detected separately, the absolute position of the electromagnetic head generating the induced signal in the sense lines cannot be determined.

Accordingly it is an object of the present invention to solve the aforementioned problems of the prior art coordinate reading system by realizing a coordinate reading system that calculates coordinate values without scanning.

It is another object of the present invention to lower the cost of manufacturing a coordinate reading system and of the tablet in particular and to increase the speed for detecting the position.

According to the present invention there is provided a coordinate reading system comprising: a tablet upon which is laid m sense lines, where m is an odd number greater than 1, each having at least one substantially rectangular portion; characterised in that at least one further sense line which comprises at least one substantially triangular shaped portion is laid upon said tablet; and in that the system comprises: a head for inducing a signal in said m sense lines and said further sense line or lines; and calculating means for determining a coarse position of the head from the signal or signals induced in said further sense line or lines and for determining a fine position of the head within the coarse position from the signals induced in said m sense lines.

In the coordinate reading system of the present invention, induced signals are induced in the sense lines due to electromagnetic coupling between the coordinate indicator and the sense lines laid on the tablet. Since the width of the sense lines can be increased or decreased along the coordinate detecting director, the magnitudes of the induced signals increase or decrease depending on the position of the coordinate indicator along the coordinate detecting direction. In further detail, since the increase or decrease inclinations of the loop width of the first sense line and the second sense lines are reversed to each other, the magnitudes of the induced signals that correspond to the position of the coordinate indicator may be obtained in each of the first and second sense lines. This coordinate reading system calculates the position over a wide range in the coordinate detecting director from the magnitudes of the induced voltages obtained from these two sense lines.

The induced signals are also induced in the rectangular return sense line groups due to electromagnetic coupling between the coordinate indicator and the rectangular return sense line groups. The position over the whole tablet surface cannot be obtained directly from the sense line groups. However, since they cover the whole tablet surface by repetitive patterns, the sense line groups are laid one by one with a slight gap and different induced signals are observed in each sense line. Hence the line position of the coordinate indicator may be found by calculating the amplitudes of induced signals of each sense line.

The coordinate reading system calculates the position over a wide range in the coordinate detecting direction from the induced signals induced in the first and second sense lines and then calculates the line position from the rectangular return sense line groups, so that the position may be calculated finely over a wide range in the coordinate detecting direction.

An embodiment of the present invention will now be described with reference to the accompanying drawings, in which:
Fig. 1 is a diagram illustrating a structure of an embodiment of a coordinate reading system according to the present invention;
Fig. 2 is a diagram illustrating a structure of a coordinate reading system;
Fig. 3 is a diagram illustrating a structure of a signal processing circuit of the coordinate reading system according to the present invention;
Fig. 4 is a diagram illustrating the relationship between positions of a coil of a zigzag sense line and the signals induced therefrom;
Fig. 5 is a diagram illustrating a structure of a coordinate reading system;
Fig. 6 is a diagram illustrating the relationship between positions of a coil on a rectangular return sense line and the signals induced therefrom;
Fig. 7 is a timing chart illustrating the selection of the sense line;
Fig. 8 is a diagram illustrating the relationship between positions of the coil and the signals induced therefrom in localised areas;
Figs. 9, 10, 11 are diagrams illustrating the relationship between positions of the coil and distribution of the induced signals for calculating the Q value;
Fig. 12 is a diagram illustrating the Q value with respect to the position of the coil;
Fig. 13 is a diagram illustrating another embodiment relating to the layout of the third through fifth rectangular return sense lines;
Fig. 14 are diagrams illustrating the layout of the sense lines according to the embodiment;
Fig. 15 is a timing chart illustrating the selecting of sense lines according to the embodiment;
Fig. 16 is a diagram illustrating coordinate calculating areas according to the embodiment;
Fig. 17 is a diagram illustrating the distribution of Q2 values across the whole tablet surface according to the embodiment; and
Fig. 18 is a diagram illustrating a prior art coordinate reading system.

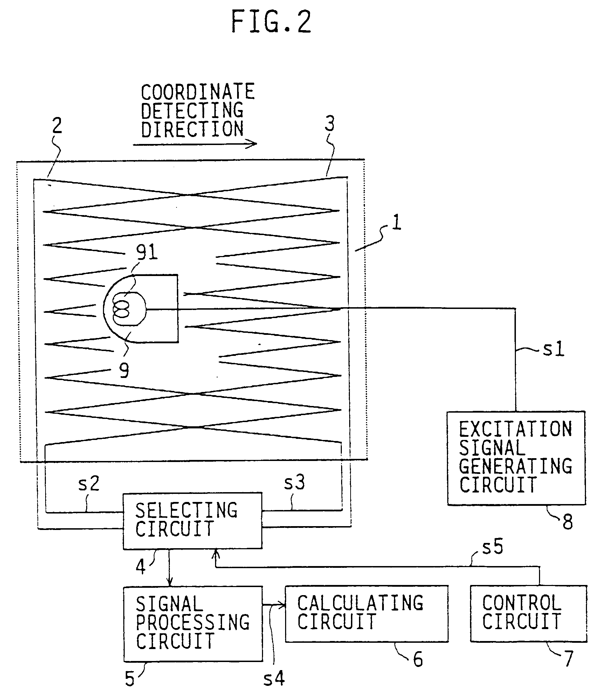

Fig. 2 is a diagram illustrating a structure of an example of a first arrangement of a coordinate reading system. To simplify its explanation, initially a one-dimensional coordinate reading system will be described.

In Fig. 2, a coordinate indicator 9 contains a coil 91 which is connected to an excitation signal generating circuit 8. The excitation signal generating circuit 8 gives excitation signals sl to the coil 91. The excitation signal sl is an AC signal of about 614.4 kHz for example. However, this frequency is not limitative as any signal may be used so long as it basically generates an electromagnetic coupling action between the coil 91 and the sense lines described later.

A first zigzag sense line 2 and a second zigzag sense line 3 are laid in a coordinate detecting direction on a tablet 1. The first zigzag sense line 2 comprises a number of connected isosceles triangles arranged with each of the perpendicular bisectors parallel to the coordinate detecting direction. Other triangular shapes may be used but isosceles triangles arranged thus simplify the calculation of coordinates. Each of the triangles of the first zigzag sense lines have a "width" decreasing along the coordinate detecting direction.

The second zigzag sense line 3 is an inversion of the first zigzag sense line 2 and is structured in the same manner with it. In this case, however, the "width" of the triangles increases with the coordinate detecting direction. Induced signals s2 and s3 are induced in those zigzag sense lines due to the AC magnetic field generated by the coil 91 in the coordinate indicator 9.

The first zigzag sense line 2 and the second zigzag sense line 3 are connected to a selecting circuit 4. The selecting circuit 4 comprises electronic switching elements, such as analog switches and connects either one of the first zigzag sense line 2 or the second zigzag sense line 3 to a signal processing circuit 5. The signal processing circuit 5 receives the induced signals s2 and s3 induced in the zigzag sense lines 2 or 3 and generates an envelope signal s4.

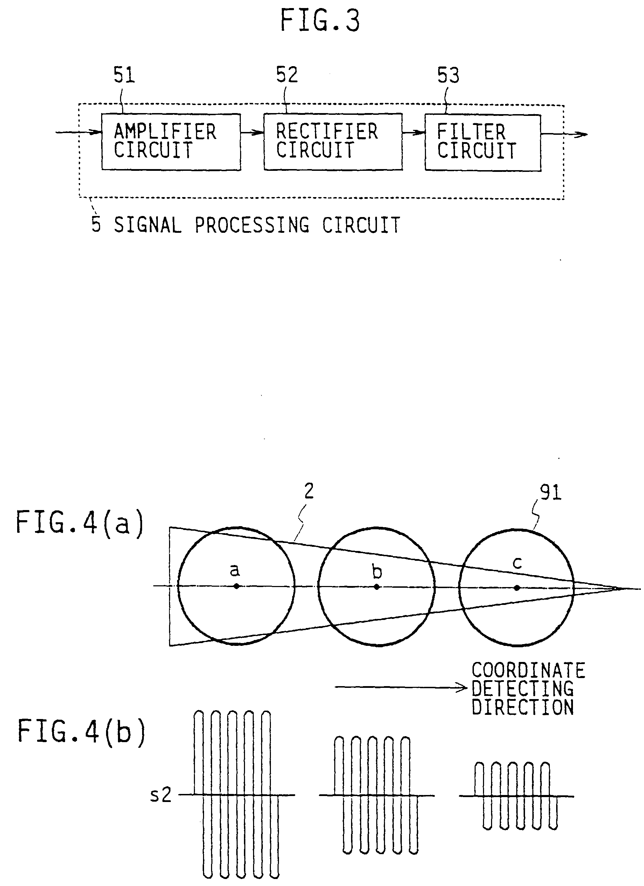

Fig. 3 is a diagram showing one example of a structure of the signal processing circuit 5 which comprises an amplifier circuit 51, a rectifier circuit 52 and a filter circuit 53. Output of the signal processing circuit 5 is connected to a calculating circuit 6.

The calculating circuit 6 receives the envelope signal s4 of the induced signals s2 and s3 and calculates coordinate values. An input section of the calculating circuit 6 for receiving the envelope signal s4 comprises an A/D converter for reading a voltage value of the envelope signal s4 as a digital value.

A control circuit 7 controls operations of the system and is connected to the selecting circuit 4 to give a selecting signal s5.

Now before explaining the operations of the system structured as described above, the relationship between a position of the coordinate indicator 9 and the induced signals will be explained exemplified by the induced signal s2 induced in the first zigzag sense line 2.

As shown in Fig. 4, when the coil 91 is placed at a point a in the figure in the area where the width of the first zigzag sense line is wide, a relatively large amount of magnetic flux which is generated by the coil 91 can penetrate through and form a loop in the zigzag sense line. As a consequence the amplitude of the induced signal s2 induced in the zigzag sense line is proportionally large. Then, as the coil 91 moves along the coordinate detecting direction, the amplitude of the induced signal s2 becomes smaller.

Accordingly the amplitude of the induced signal s2 is indicative of the position where the coil 91 is placed. Utilizing this characteristic, the coordinate reading system of the present invention finds coordinate values from the amplitudes of the induced signals.

However, the amplitude of the induced signal in the zigzag sense line is not influenced only by the position as mentioned above. It is evident that it largely fluctuates also by the height of the coordinate indicator above the tablet 1 and it is necessary to eliminate fluctuations caused by the height and others when calculating coordinate values. To this end, two zigzag sense lines are provided to find coordinate values in which the fluctuation due to height is eliminated by processing the induced signals induced in two zigzag sense lines.

If only one sense line element is provided not forming zigzag sense lines, it is also evident that the amplitude of the induced signal fluctuates when the coil 91 is moved in the direction perpendicular to the coordinate detecting direction.

Thus, a plurality of sense lines are connected in the direction perpendicular to the coordinate detecting direction for the purpose of eliminating the influence of any movement in the direction perpendicular to the coordinate detecting direction. This is necessary when a two-dimensional coordinate reading system is required.

Next, the operation of the aforementioned system will be explained.

The excitation signal generating circuit 8 supplies the excitation signal s1 to the coil 91 in the coordinate indicator 9 and thereby the coil 91 generates an AC magnetic field. The control circuit 7 first supplies the selecting signal s5 to the selecting circuit 4 to connect the first zigzag sense line 2 to the signal processing circuit 5.

When the coordinate indicator 9 is placed on the tablet 1, an induced signal s2 is induced in the first zigzag sense line 2, and fluctuates depending on the positional relationship of the coordinate indicator 9. This induced signal s2 is inputted to the signal processing circuit 5 passing through the selecting circuit 4. The induced signal s2 is then amplified, rectified and converted into the envelope signal s4 by the signal processing circuit 5.

The calculating circuit 6 receives the envelope signal s4. The input circuit of the calculating circuit 6 comprises the A/D converter as described before and the magnitude of the envelope signal s4 is read using the digital value. The read voltage value is then memorised.

Then the control circuit 7 gives the selecting signal s5 to the selecting circuit 4 to connect the second zigzag sense line 3 to the signal processing circuit 5.

The induced signal s3 induced in the second zigzag sense line 3 is converted into the envelope signal s4 in the same manner as described above and its voltage value is read by the calculating circuit 6.

Coordinate values are found in the calculating circuit 6 as follows. Let the voltages of each induced signal be represented as follows:
- V1 =: amplitude of the voltage of the induced signal s2 of the first zigzag sense line 2, and
- V2 =: amplitude of the voltage of the induced signal s3 of the second zigzag sense line 3.
From those voltage values, a coordinate value 'cood' is found by the following expression:$\text{cood = V2 - V1 + C}$ where C is a constant which is an offset value for defining an origin of the coordinate system.

In Fig. 2, when the coil 91 is placed in the opposite direction to the coordinate detecting direction, i.e. in the left hand area, since V1 > V2, the value of V2 - V1 becomes minus. Therefore, if C is selected so that the calculation result becomes positive when the coil 91 is placed at the left end, then the coordinate value 'cood' turns out to be a positive value. Generally the left hand end of the position detecting area is selected to be the origin so that coordinate values always turn out to be positive values, though the position of the origin may be changed in accordance with particular requirements.

Experiments have shown that 'cood' thus found corresponds to the position of the coil 91 almost linearly. It was also found that the influence of height could be eliminated by taking the difference of those two induced signals.

In the arrangement described above the first and second zigzag sense lines are selected by the selecting circuit 4 to direct the induced signals to the signal processing circuit 5. However, two sets of signal processing circuit 5 may be provided with one connected to the first zigzag sense line 2 and the other to the second zigzag sense line 3, respectively. In which case, the selecting circuit 4 and the control circuit 7 for controlling it becomes unnecessary and the outputs of the two sets of signal processing circuits are connected to the calculating circuit 6. With this structure, the calculating circuit 6 can receive the amplitudes of the two sets of induced signals at the same time, so that the processing speed is further increased compared to the aforementioned arrangement.

Moreover, although the aforementioned arrangement was described for a one-dimensional coordinate reading system, a two-dimensional coordinate reading system may be readily structured by providing and orthogonally disposed two sets of one dimensional coordinate reading systems structured as described above.

Furthermore, if compensation of movement in the direction perpendicular to the coordinate detecting direction can be controlled by other means in such a one-dimensional coordinate reading system, then the plurality of sense lines need not be provided as shown in the aforementioned arrangement. In this case, the tablet may be structured with a simpler structure.

Moreover, when there is no movement in height, those two sense lines having an increasing and decreasing inclination of width need not be combined, thereby allowing the structure to be further simplified.

Although the lines comprising the zigzag sense lines are drawn as straight lines in Fig. 2 in the aforementioned arrangement, they may comprise appropriate curved lines. Error of coordinate values in the coordinate detecting direction may be compensated by structuring the lines by curved lines. A further development is a coordinate reading system that calculates coordinates by a desired function characteristic.

Although the excitation signal generating circuit 8 is connected to the coil 91 in the coordinate indicator 9 to provide the excitation signal and to generate an AC magnetic field in the aforementioned arrangement, this structure is not an essential part of the present invention. Various coordinate reading systems have utilized forms of electromagnetic coupling between the tablet 1 and the coordinate indicator 9 and such technology relating to this coupling principle may be applied to the present invention.

For example, there exists a system in which an excitation means is provided in a tablet and the AC magnetic field generated from it is coupled with a detecting means of the tablet through an intermediary of a coordinate indicator. There is another such system in which induced signals caused by the AC magnetic fields generated from an excitation means of a tablet are stored once in a coordinate indicator and then the AC magnetic field is generated again from the coordinate indicator utilizing its energy. These are wireless coordinate reading systems in which the coordinate indicator need not be connected with the tablet by a signal cable. The sense line structure for inducing induced signals also may be structured in these coordinate reading systems in the same manner with the aforementioned arrangement.

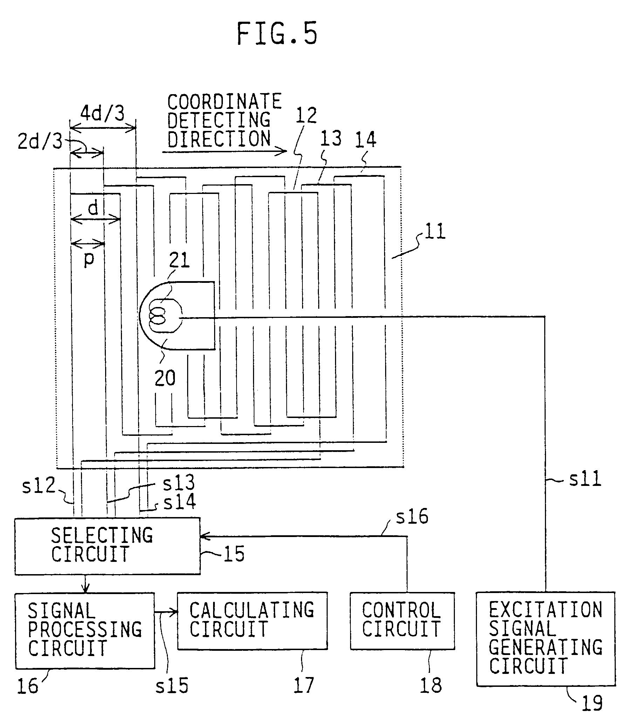

Referring now to Figs. 5 to 13, an example of a second arrangement will be explained. Fig. 5 is a diagram illustrating a structure of a coordinate reading system according to the second arrangement. To simplify its explanation, description will be made again for a one-dimensional coordinate reading system.

In Fig. 5, a coordinate indicator 20, a coil 21, an excitation signal generating circuit 19 and a signal processing circuit 16 are provided in the same manner as the first described arrangement.

Three sense lines are laid on a tablet 11 in this arrangement. That is, the three sense lines comprise a first rectangular return sense line 12, a second rectangular return sense line 13 and a third rectangular return sense line 14. Each sense line has the same construction and comprises a plurality of conductor lines which are laid in parallel having an interval of d in the direction perpendicular to the coordinate detecting direction therebetween. Each sense line has the ends shaped in a rectangular shape and are connected together. Those three sense lines are laid by setting one reference sense line and by creating gaps of 2/3 of the interval d and 4/3 of the same for the remaining two lines. For the convenience of the explanation below, the interval between neighbouring two sense lines shall be called a sense line pitch and expressed by p. In this case, the present arrangement has a relationship of p = 2d/3.

In these sense lines, induced signals s12, s13 and s14 are induced respectively due to the AC magnetic field generated by the coil 21 in the coordinate indicator 20.

The sense line groups are connected to the selecting circuit 15. The selecting circuit 15 comprises electronic switching elements, such as analog switches, and connects one of the sense lines of the first rectangular return sense line 12 through to the third rectangular return sense line 14 to the signal processing circuit 16.

The signal processing circuit 16 inputs the induced signals s12, s13 and s14 induced in each sense line and generates their envelope signal s15.

Output of the signal processing circuit 16 is connected to the calculating circuit 17. The calculating circuit 17 receives the envelope signal sl5 and calculates coordinate values. An input section of the calculating circuit 17 for inputting the envelope signal s15 comprises an A/D converter for reading a voltage value of the envelope signal s15 as a digital value.

A control circuit 18 controls operations of the system and is connected to the selecting circuit 15 to give a selecting signal s16.

Next, before explaining the operation of the second arrangement the relationship between positions of the coordinate indicator 20 and the amplitudes of induced signals induced on one sense line will be explained exemplified by the induced signal s12 induced in the first rectangular return sense line 12.

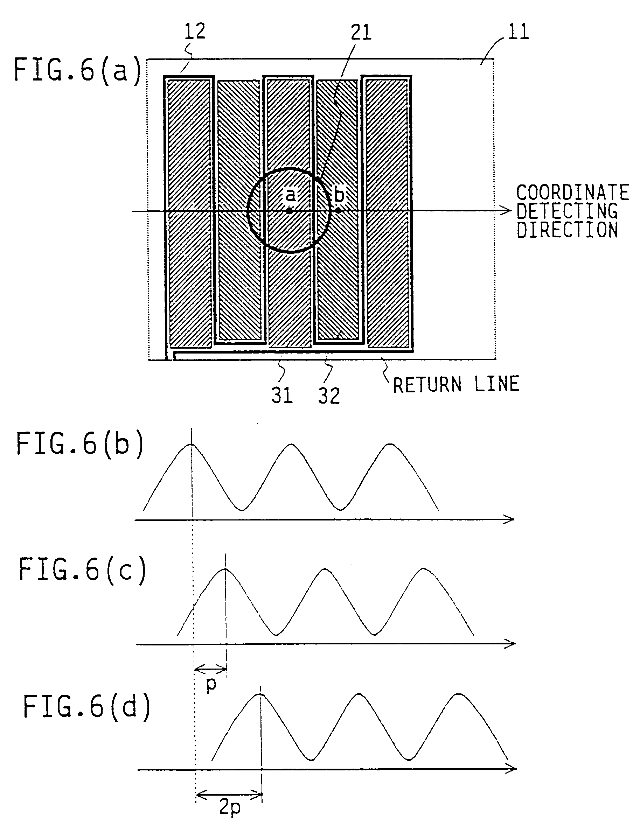

As shown in Fig. 6a, the reading surface of the tablet 11 is structured so that an area 31 in which a loop coil is formed by the first rectangular return sense line 12 and its return line and an area 32 in which no loop coil is formed appear alternately.

When the coil 21 is now placed in the middle of the area 31 in which the loop coil is formed, i.e. at point a in Fig. 6a, the electromagnetic coupling between the coil 21 and the first rectangular return sense line 12 is the strongest and thereby an induced signal with the maximum amplitude is generated. The coupling becomes weaker as the coil 21 moves in the coordinate detecting direction and in the middle of the area 32, i.e. at point b in Fig. 6a, the amplitude becomes the minimum. Observation shows that the relationship between the positions of the coil 21 and the amplitudes of the induced signals turns out as shown in Fig. 6b.

Since the second and third rectangular return sense lines are laid respectively having gaps of sense line pitches p and 2p from the first rectangular return sense line, the relationships between the positions of the coil 21 and the amplitudes of the respective induced signals turns out as shown in Figs. 6c and 6d.

Accordingly, the amplitudes of the induced signal induced in each sense line is indicative of the position of the coil 21. Utilizing this characteristic, the present coordinate reading system finds coordinate values from the amplitudes of the induced signals.

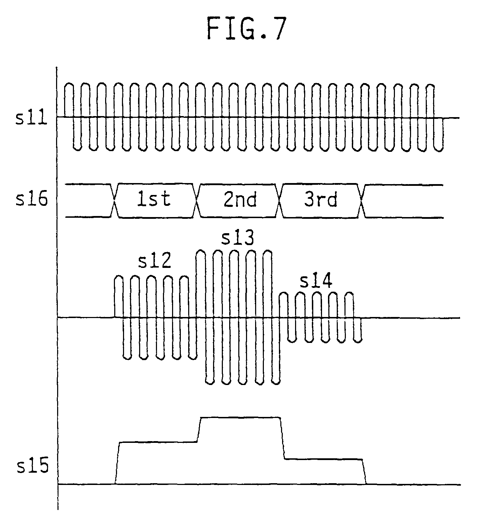

Referring to a timing chart in Fig. 7, operation of the system will now be explained.

The excitation signal generating circuit 19 gives excitation signals s11 to the coordinate indicator 20, so that the coil 21 generates the AC magnetic field.

When the coordinate indicator 20 is placed on the tablet 11, an induced signal is induced in each sense line on the tablet 11 due the AC magnetic field generated by the coil 21.

The control circuit 18 gives the selecting signals s16 to the selecting circuit 15 to sequentially select those three sense lines. As a result, induced signals s12, s13 and s14 induced in the selected sense lines are inputted sequentially to the signal processing circuit 16.

Normally the processing for selecting three sense lines is carried out successively, though this scanning order is not essential and it is not always necessary to scan in such order.

Each induced signal is amplified, rectified and converted into the envelope signal s15 in the signal processing circuit 16. A coordinate is calculated from the envelope signal of the induced signal in the following manner.

The calculating circuit 17 receives the envelope signal s15 from the signal processing circuit 16 each time the sense lines are sequentially selected. The input circuit of the calculating circuit 17 comprises the A/D converter as described before to convert the magnitude of the envelope signal s15 to a digital value.

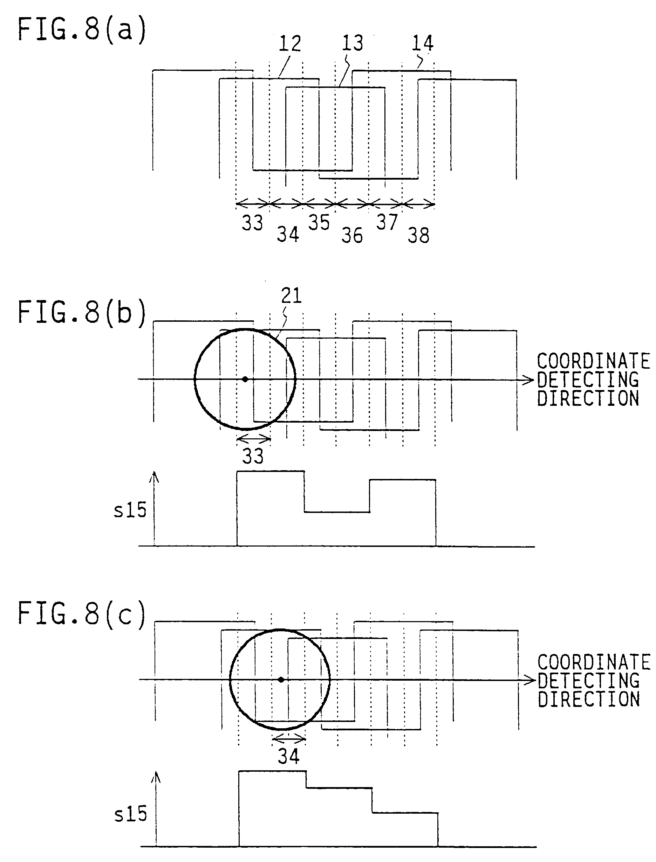

The calculating circuit 17 compares the magnitude of the envelope signals s15 sequentially inputted and detects roughly the area in which the coil 21 is placed. Fig. 8 explains the relationship between the positions of the coil 21 and the magnitudes of each induced signal.

As shown in Fig. 8a, let part of the tablet be divided into six areas 33, 34, 35, 36, 37 and 38 by the three sense lines. The whole area of the tablet is a mere repetition of the pattern of this whole area. It will be understood that, for example, an area on the right hand side of the area 38 is equivalent to the area 33 with respect to the relative position of three sense lines. The relationship of the magnitudes of each sense line changes depending in which area the coil 21 is placed.

As described before, the amplitude of the induced signal fluctuates due to the relationship between the position of the coil 21 and the sense line as shown in Fig. 6. From this relationship, when the coil 21 is placed, for example, in the area 33 as shown in Fig. 8b, the largest induced is generated in the first rectangular return sense line 12 and its amplitude becomes smaller in order from the third rectangular return sense line 14 to the second rectangular return sense line 13. This relationship of the magnitude is shown by the envelope signal s15 in Fig. 8b.

When the coil 21 is moved in the coordinate detecting direction and is placed in the area 34, the magnitude of the induced signals turn out in order from large to small from the first rectangular return sense line 12 to the second rectangular return sense line 13 and to the third rectangular return sense line 14. Similarly, the relationships of the magnitudes of the induced signals in each area turn out as shown in the following table 1.

**Table 1:**

| The relationship between magnitudes of Induced Signals per each coarse area | | | |
|---|---|---|---|
| | Induced Signals | | |
| Area | Maximum | Medium | Minimum |
| 33 | first sense line | third sense line | second sense line |
| 34 | first sense line | second sense line | third sense line |
| 35 | second sense line | first sense line | third sense line |
| 36 | second sense line | third sense line | first sense line |
| 37 | third sense line | second sense line | first sense line |
| 38 | third sense line | first sense line | second sense line |

The position can be roughly detected by determining the relationship of the magnitudes of the induced signals as described above.

A finer position in each aforementioned area may be found as follows. Let the three envelope signals be coded as follows:
- Vp =: amplitude voltage of the maximum signal (called a peak signal)
- Vph =: amplitude voltage of the middle signal
- Vpl =: amplitude voltage of the minimum signal.
Then from above, the following value of magnitude Q is found:$\text{Q = (Vp - Vph)/(Vp - Vpl)}$

The value of Q has the following characteristics.

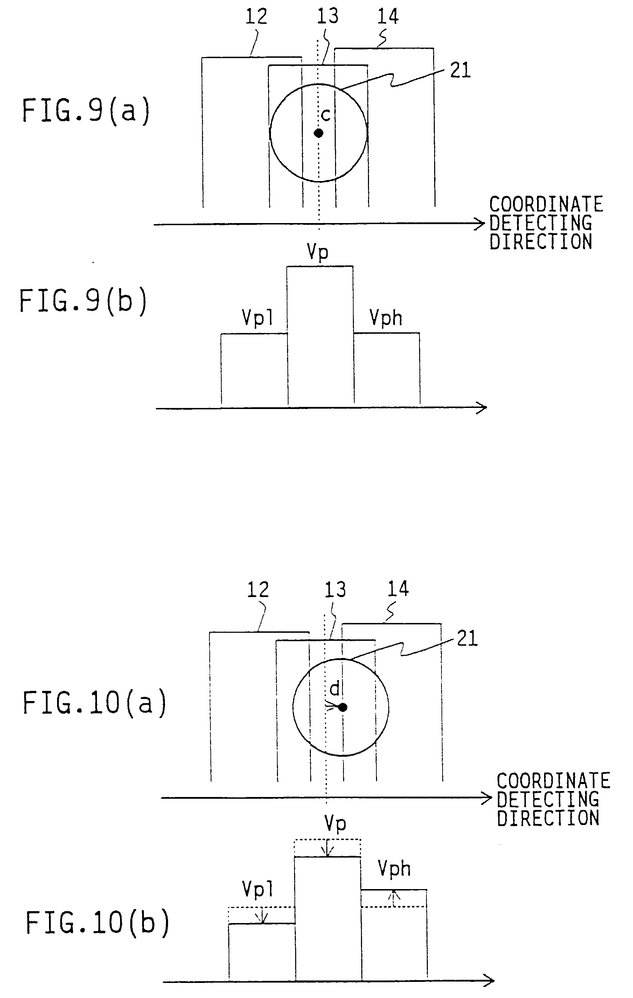

When the coil 21 is placed at the center of the second rectangular return sense line 13, i.e. at point c, as shown in Fig. 9a, the maximum induced signal is induced in the second rectangular return sense line 13 and a peak signal Vp is inputted to the calculating circuit 17 when this sense line is selected.

When the first rectangular return sense line 12 is selected, an induced signal smaller than Vp is induced and Vpl in inputted to the calculating circuit 17. When the third rectangular return sense line 14 is selected, similarly Vph is inputted to the calculating circuit 17. In the first rectangular return sense line 12 and the third rectangular return sense line 14, the effect of the electromagnetic coupling is equal and Vph = Vpl. Accordingly, from expression (2), Q = 1.

When the coil 21 is moved in the coordinate detecting direction as shown in Fig. 10a, the coupling of the coil and the sense lines become smaller in the first rectangular return sense line 12 and the second rectangular return sense line 13 and in contrast to that, it becomes larger in the third rectangular return sense line 14. As a result, Vp and Vpl decrease and become smaller and Vph increases and becomes larger and Q in expression (2) takes a value smaller than 1.

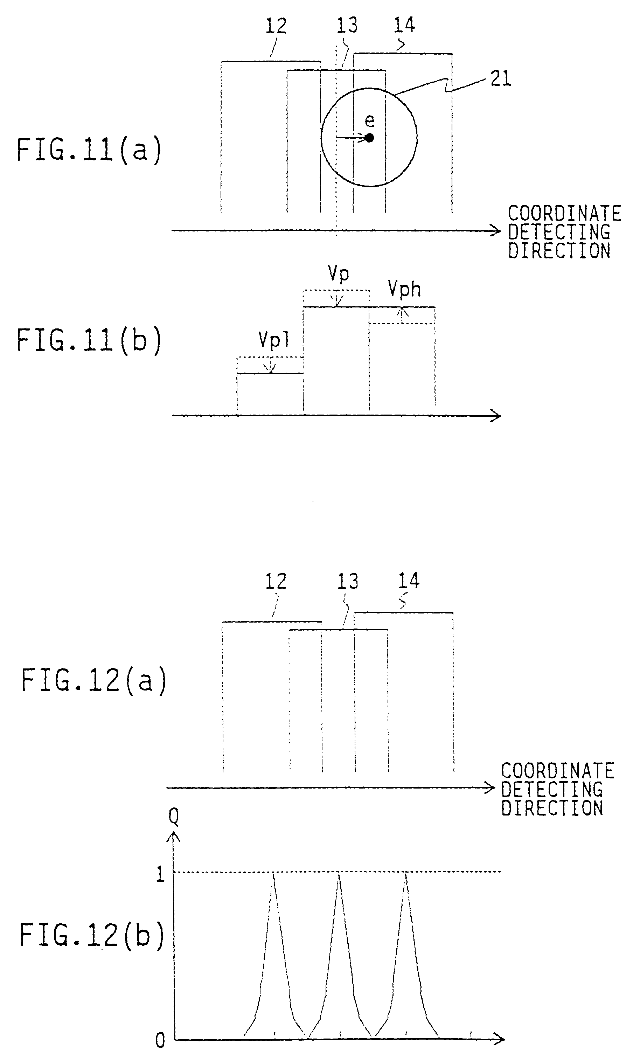

When the coil 21 further moves to a position in Fig. 11a i.e. when it moves to the equivalent of half of the sense line pitch p from the position in Fig. 9, the coupling of the coil and the sense lines becomes equal in the second rectangular return sense line 13 and the third rectangular return sense line 14. That is, Vp = Vph and therefore, Q = 0.

Q may be found in the same manner when the coil is moved to the left from the position in Fig. 9 and this increasing and decreasing behaviour of Q is the same in this case as well.

Q takes a value between 1 and 0 per 1/2 pitch of the sense line pitch p as shown in Fig. 12b and corresponds to a linear or 1:1 relationship for a finer position between sense lines. By finding out this characteristic of Q beforehand by experiments, a finer position between the sense lines may be found by finding the exact value of Q from the induced signals.

The coarse position having already been found and the fine position found here enable coordinate values to be found in a local area on the tablet and then adjusting them.

Here the areas 33 through 38 as shown in Fig. 8a are numbered from 0 to 5 respectively to indicate the coarse position by the number and the numbers of the coarse positions are denoted with a code 'Area'. Coordinate values may be then found from the following expressions (3) or (4):$\text{Coordinate value = Area x p + f(Q)}$ where Area = 1, 3, 5 or$\text{Coordinate value = Area x p - f(Q)}$ where Area = 0, 2, 4
Here the codes may be defined again as follows:
- Area: : coarse position
- p: : sense line pitch
- f(Q): : fine position between sense lines that corresponds to Q.

The coordinate values of the position where the coordinate indicator is placed at a local area on the tablet can be thus found.

However, as is apparent from the above explanation, though a position at a local area may be detected by this coordinate reading system, the position over the whole area of the tablet cannot be detected. For example, if the coil has been placed in a certain area on the last time when the coordinate was calculated, movement of the coil can only accurately be found in the next calculation if the coil moves within an area range of ±5 centering on the original area. When the coil moves more than that, the distinction cannot be made when movement is more than ±5 areas.

However, the system detects about 200 points per second for example, i.e. about 5 msec. per one point, and the range of the movement of the coordinate indicator during that time is limited. Accordingly, a relative coordinate reading system may be structured which calculates relative movement from the position previously detected per each coordinate detecting period and outputs it as a relative coordinate value. The present arrangement can thus be used as a pointing device in applications where there is a pointer on a display screen.

Although the aforementioned arrangement has been described about a one-dimensional coordinate reading system, a two-dimensional coordinate reading system may be readily structured when two sets of one-dimensional coordinate reading system thus structured are provided and orthogonally disposed to each other.

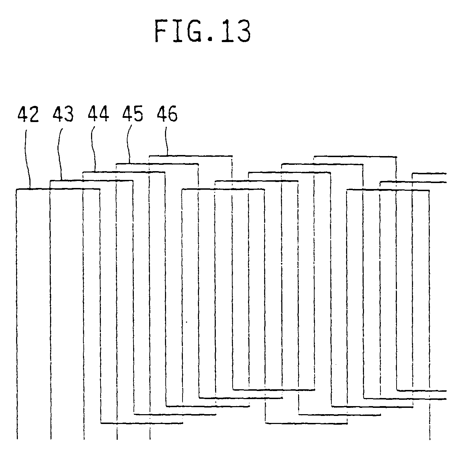

Moreover, though the tablet has been structured by three sense lines in the aforementioned arrangement, the tablet may be structured by any number of sense lines similarly so long as an odd number of sense lines are used. Fig. 13 shows an arrangement when five sense lines are laid. Its detailed explanation is omitted here.

Beside that, the present invention may be implemented regardless of its coupling principle so long as the coordinate reading system utilizes electromagnetic coupling between the tablet and the coordinate indicator.

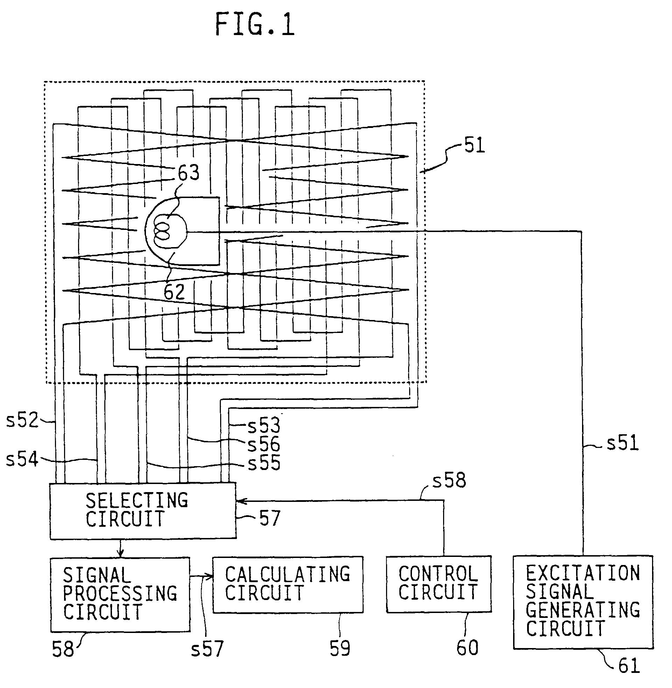

Referring now to Figs. 1 and 14 through 17, an embodiment of the present invention will be explained. Fig. 1 is a diagram illustrating a structure of a coordinate reading system according to the embodiment. To simplify its explanation, description will be made on a one-dimensional coordinate reading system also in the following description.

In Fig. 1, a coordinate indicator 62, a coil 63, an excitation signal generating circuit 61 and a signal processing circuit 58 are disposed in the same manner as described above.

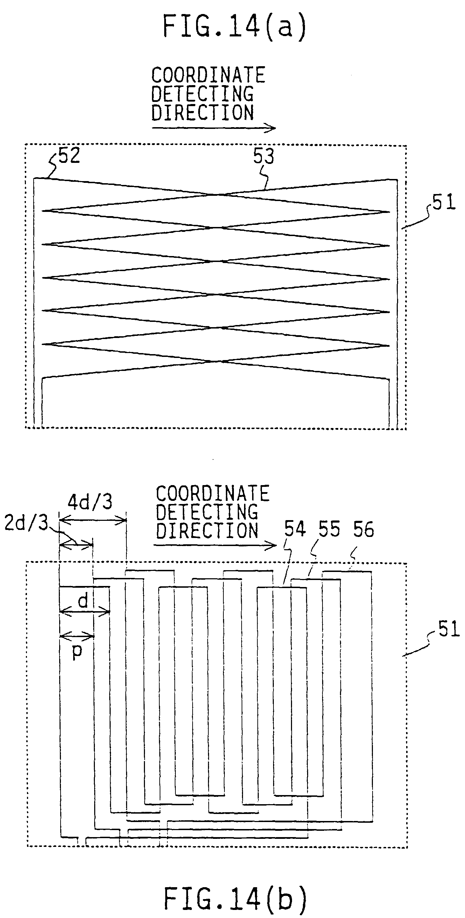

A plurality of sense line groups are laid on a tablet 51. A structure of the sense line groups will be explained with reference to Fig. 14.

Fig. 14a shows a first zigzag sense line 52 and a second zigzag sense line 53. The first and second zigzag sense lines have similar constructions with the zigzag sense lines described above.

These sense lines are used for finding a coarse position of the coordinate indicator 62 in the whole coordinate detecting range as described later. On these sense lines, induced signals s52 and s53 are induced respectively by the AC magnetic field generated by the coil 63 in the coordinate indicator 62.

Fig. 14b shows rectangular return sense line groups. In this embodiment, three sense lines are laid as the rectangular return sense line groups. That is, they comprise a first rectangular return sense line 54, a second rectangular return sense line 55 and a third rectangular return sense line 56.

Each sense line has the same construction as the rectangular return sense lines in the second arrangement. In the figure, d indicates an interval between the conductor lines and p indicates a sense line pitch, and the relationship between them is as shown in the figure.

These sense lines are used for finding the fine position of the coordinate indicator 62 as described later. On those sense lines, induced signals s54, s55 and s56 are induced respectively by the AC magnetic field generated by the coil 63 in the coordinate indicator 62.

These sense line groups are connected to the selecting circuit 57. The selecting circuit 57 comprises electronic switching elements, such as analog switches, and connects one of the sense lines among the first zigzag sense line 52 through the third rectangular return sense line 56 to the signal processing circuit 58.

The signal processing circuit 58 receives the induced signals s52 through s56 induced in each sense line and generates their envelope signal s57.

Output of the signal processing circuit 58 is connected to the calculating circuit 59. The calculating circuit 59 receives the envelope signal s57 of the induced signal and calculates coordinate values. An input section of the calculating circuit 59 for inputting the envelope signal s57 comprises an A/D converter for reading a voltage value of the envelope signal s57 as a digital value.

The control circuit controls operations of the system and is connected to the selecting circuit 57 to give selecting signals s58.

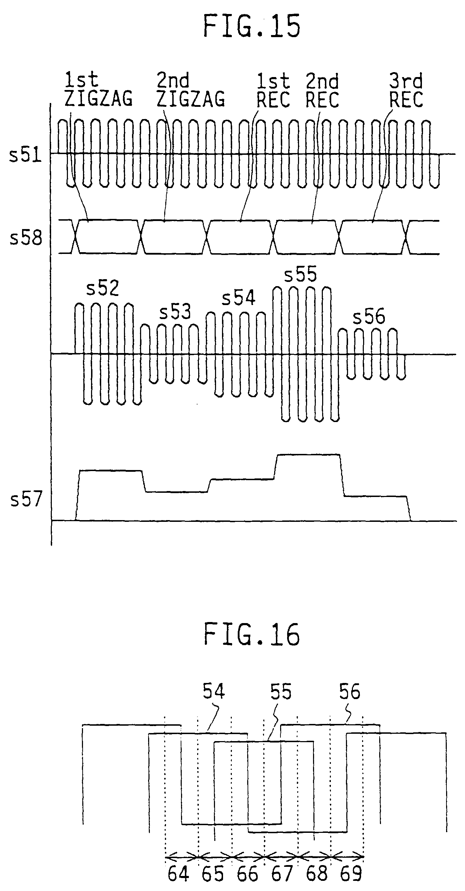

Next the operation of this system will be explained in reference to a timing chart in Fig. 15.

Since the excitation signal generating circuit 61 gives excitation signals s51 to the coordinate indicator 62, the coil 63 generates AC magnetic field. When the coordinate indicator 62 is placed on the tablet 51, an induced signal is induced on each sense line of the tablet 51 due to the AC magnetic field generated by the coil 63.

The control circuit 60 gives the selecting signal s58 to the selecting circuit 57 to sequentially select the sense lines. As a result, the induced signals s52 through s56 induced on the selected sense lines are sequentially inputted to the signal processing circuit 58.

Although the processing for selecting the sense lines is carried out in order from the first zigzag sense line 52 to the third rectangular return sense line 56 in the timing chart in Fig. 15, this selecting order is not essential and it is not always necessary to select them in this order.

Each induced signal is amplified, rectified and converted into the envelope signal s57 in the signal processing circuit 58.

Next, description will be made on the operation for calculating coordinates from the envelope signals of the induced signals. In this tablet, a coarse position over the whole coordinate detecting range and a fine position within the coarse position are separately found and from the results of them, a fine position over the whole coordinate detecting range is found.

The method for finding the coarse position in the whole coordinate detecting range is the same as that described above for the first arrangement. For the explanation below, an expression (5) for finding a value Q2 for calculating a coarse coordinate is given as follows:$\text{Q2 = V2 - V1}$ where,
- V1 =: the amplitude voltage of the induced signal s52 of the first zigzag sense line 52, and
- V2 =: the amplitude voltage of the induced signal s53 of the second zigzag sense line 53.

The method for finding the fine position in the coarse position is the same as that described above for the second arrangement. Here the 'coarse position' means areas 64 through 69 which are divided by the first rectangular return sense line 54 through the third rectangular return sense line 56 as shown in Fig. 16. An expression (6) for finding a value Q for calculating the coordinate is given as follows:$\text{Q = (Vp - Vph)/(Vp - Vpl)}$ where,
- Vp =: the amplitude voltage of the maximum signal (called a peak signal)
- Vph =: the amplitude voltage of the middle signal.
- Vpl =: the amplitude voltage of the minimum signal.

Next a method for specifying the position in the whole coordinate detecting range will be explained.

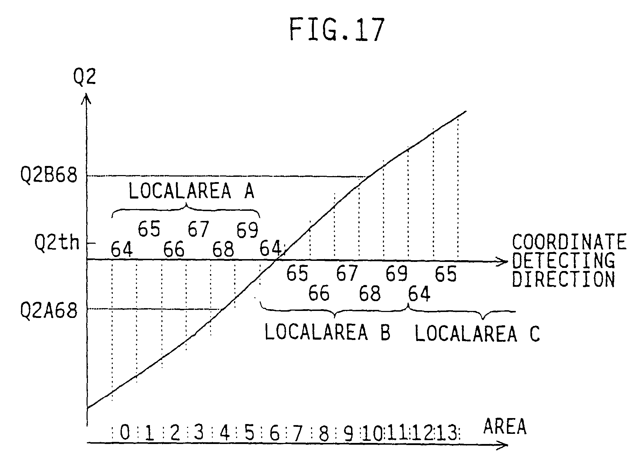

Fig. 17 shows Q2 calculated as described above in relation to the coarse position and shows a tendency of Q2 in two local areas A and B tentatively defined. The number on the axis of abscissa indicates a coarse position in the local area as shown in Fig. 16.

Now consider that the coil 63 is placed in the coarse position 68 in the local area B. At first the coil 63 is judged to be placed in the coarse position 68 by the method for finding the fine position in a coarse position. The position in the whole coordinate detecting range is not known yet at this stage. In Fig. 17, the coarse position 68 in the local area A and the coarse position 68 in the local area B are candidates of the position in the whole coordinate detecting range.

From these candidates, the position in the whole coordinated detecting range is specified by Q2. That is, Q2 must be found as a value around Q2 A68 if the coil 63 is placed in the local area A and a value around Q2 B68 if it is placed in the local area B as shown in Fig. 17. Then by predetermining values in the middle of them, i.e. Qth in the figure, as threshold values and by comparing with these values, the position of the coil may be specified in which local area it is placed. The threshold values are defined similarly for all the cases and are predetermined.

The reason for not specifying the position in the whole tablet surface only by the value of Q2 but to determine it by combining it with the coarse position in the local area is as follows. According to experiments conducted, Q2 does not linearly correspond strictly with the positions along the coordinate detecting direction and the coarse position 64 or 69 in the local area could not be directly specified. However, if the method as described above is adopted, only the coarse position 68 in the local area A and the coarse position 68 in the local area B, i.e. only the coarse position that appears in a certain interval, needs to be discriminated, so that they can be discriminated and specified by comparing Q2 with the threshold value.

The coarse position in the whole coordinate detecting range and the fine position in the coarse position can be thus found, so that from them, the fine position in the whole coordinate detecting area may be found.

Here the coarse position 64 through 69 shown in Fig. 17 are numbered from the origin over the whole coordinate detecting range. In the figure, the coarse position 64 in the local area A is 0 and the coarse positions are numbered in order in the coordinate detecting direction. The numbers are denoted with a code of 'Cp'. Coordinate values may be then found by the following expressions (7) or (8):$\text{Coordinate value = Cp x p/2 + f(Q)}$ where Cp = 1, 3, 5, or$\text{Coordinate value = Cp x p/2 - f(Q)}$ where Cp = 0, 2, 4
Here the codes may be defined again as follows:
- Cp: : coarse position
- p: : sense line pitch
- f (Q): : fine position between sense lines that corresponds to Q.

The fine coordinate values of the position where the coordinate indicator is placed in the whole coordinate detecting range can be thus found.

Various modifications which have been described concerning the first and second arrangement may be implemented also on this embodiment, although their explanation is omitted here.

As described above, according to the present invention, the coordinate reading system is structured by providing several sense lines laid so that an electromagnetic coupling is generated with the coordinate indicator across the whole tablet surface. The amplitude of induced signals induced due to the electromagnetic coupling is changed depending on the position where the coordinate indicator is placed. The calculation of the position where the coordinate indicator is placed is based on the induced signals induced in those sense line groups. Accordingly, unlike in the prior art coordinate reading system many sense lines and many switching means for switching them need not be provided in a tablet and the number of times for scanning them may be reduced. Thus the structure of the coordinate reading system and of the tablet in particular may be simplified. Moreover, coordinates may be calculated at a higher speed.

## Claims

1. A coordinate reading system comprising:
a tablet (51) upon which is laid m sense lines (54, 5, 56), where m is an odd number greater than 1, each having at least one substantially rectangular portion;
characterised in that at least one further sense line which comprises at least one substantially triangular shaped portion is laid upon said tablet (51);
and in that the system comprises:
a head (62) for inducing a signal (s52, s53, s54, s55, s56) in said m sense lines and said further sense line or lines; and
calculating means (58, 59) for determining a coarse position (Q2) of the head from the signal or signals (s52, s53) induced in said further sense line or lines and for determining a fine position (Q) of the head within the coarse position (Q2) from the signals (s54, s55, s56) induced in said m sense lines.

2. The system of claim 1, wherein two of said further sense lines are provided such that a first of the further sense lines has the width of the triangular shaped portion (5) thereof decreasing in a coordinate sensing direction and a second of the further sense lines has the width of the triangular shaped portion (5) thereof increasing in said coordinate sensing direction.

3. The system of claims 1 or 2, wherein the rectangular portions comprising said m sense lines (12, 13, 14) have a width d, and wherein there is an equal gap between adjacent sense lines.

4. The system of claim 3, wherein adjacent ones of the m sense lines (12, 13, 14) are offset from each other by a pitch p, where p < d.

5. The system of any one of claims 1 to 4, further comprising means (4, 15, 27) for selecting one of the sense lines and/or the further sense lines and passing the induced signal on said selected sense line to said calculating means (16, 17, 59, 60).

6. The system of any one of the preceding claims, in which there is a calculating means for each sense line.

7. The system of one of the preceding claims, in which said head (21) comprises a coordinate indicator having a coil (21) therein.

8. The system of any one of the preceding claims, in which each of m rectangular return sense lines, which is a group of conductor lines laid in parallel to each other in an equal interval in a coordinate detecting direction and returned and connected in a rectangular shape, is laid with a gap of 2n/m, 0 ≤ n ≤ m, of said interval of said conductor line group that comprises one sense line.

## Patentansprüche

1. Koordinatenablesesystem, umfassend:
eine Tafel (51), auf welcher m Erfassungsleitungen (54, 5, 56) verlegt sind, wobei m eine ungerade Zahl größer als 1 ist, von welchen jede wenigstens einen im wesentlichen rechtwinkligen Abschnitt aufweist,
dadurch gekennzeichnet, daß wenigstens eine weitere Erfassungsleitung auf der Tafel (51) verlegt ist, welche Leitung wenigstens einen im wesentlichen dreieckig geformten Abschnitt umfaßt,
und daß das System umfaßt:
einen Kopf (62) zum induzieren eines Signals (s52, s53, s54, s55, s56) in den m Erfassungsleitungen und der weiteren Erfassungsleitung oder den Leitungen, und
Berechnungsmittel (58, 59) zum Bestimmen einer Grobposition (Q2) des Kopfs aus dem Signal oder den Signalen (s52, s53), welche in der weiteren Erfassungsleitung oder den Leitungen induziert werden, und zum Bestimmen einer Feinposition (Q) des Kopfs innerhalb der Grobposition (Q2) aus den in den m Erfassungsleitungen induzierten Signalen (s54, s55, s56).

2. System nach Anspruch 1, worin zwei der weiteren Erfassungsleitungen vorgesehen sind, derart, daß eine erste der weiteren Erfassungsleitungen in der Breite ihres dreieckig geformten Abschnitts (5) in einer Koordinatenerfassungsrichtung abnimmt und eine zweite der weiteren Erfassungsleitungen in der Breite ihres dreieckig geformten Abschnitts (5) in der Koordinatenerfassungsrichtung zunimmt.

3. System nach Anspruch 1 oder 2, worin die die m Erfassungsleitungen (12, 13, 14) umfassenden rechtwinkligen Abschnitte eine Breite d aufweisen, und worin ein gleicher Zwischenraum zwischen benachbarten Erfassungsleitungen ist.

4. System nach Anspruch 3, worin benachbarte der m Erfassungsleitungen (12, 13, 14) bezüglich einander um einen Abstand p versetzt sind, wobei p < d.

5. System nach einem der Ansprüche 1 bis 4, ferner umfassend Mittel (4, 15, 27) zum Auswählen einer der Erfassungsleitungen und/oder der weiteren Erfassungsleitungen und zum Leiten des an der ausgewählten Erfassungsleitung induzierten Signals zu den Berechnungsmitteln (16, 17, 59, 60).

6. System nach einem der vorhergehenden Ansprüche, bei welchem für jede Erfassungsleitung ein Berechnungsmittel vorhanden ist.

7. System nach einem der vorhergehenden Ansprüche, bei welchem der Kopf (21) einen Koordinatenanzeiger mit einer Spule (21) darin umfaßt.

8. System nach einem der vorhergehenden Ansprüche, bei welchem jede von m rechtwinkligen Rückführerfassungsleitungen, welche eine Gruppe von Leiterleitungen bildet, die parallel zueinander mit gleichem Abstand in einer Koordinatenerfassungsrichtung verlegt und zurückgeführt und in eine rechtwinklige Form verbunden sind, mit einem Zwischenraum von 2n/m, 0 ≤ n ≤ m, des Abstands der Leiterleitungsgruppe verlegt ist, welche die eine Erfassungsleitung umfaßt.

## Revendications

1. Système de lecture de coordonnées comportant :
une tablette (51) sur laquelle sont posées m lignes (54, 5, 56) de détection; où m est un nombre impair supérieur à 1, chacune ayant au moins une partie sensiblement rectangulaire ;
caractérisé en ce qu'au moins une ligne de détection supplémentaire qui comporte au moins une partie de forme sensiblement triangulaire est posée sur la tablette (51) ;
et en ce que le système comporte :
une tête (62) destinée à induire un signal (s52, s53, s54, s55, s56) dans les m lignes de détection et la ou les ligne(s) de détection supplémentaire(s) ; et
des moyens (58, 59) de calcul destinés à déterminer une position (Q2) grossière de la tête à partir du signal ou des signaux (s52, s53) induit(s) dans la ou les ligne(s) de détection supplémentaire(s) et destinés à déterminer une position (Q) fine de la tête à l'intérieure de la position (Q2) grossière des signaux (s54, s55, s56) induits dans les m lignes de détection.

2. Système suivant la revendication 1, dans lequel deux des lignes de détection supplémentaires sont prévues de sorte qu'une première des lignes de détection supplémentaires a la largeur de sa partie (5) en forme de triangle qui diminue suivant une direction de détection de coordonnées et qu'une seconde des lignes de détection supplémentaires a la largeur de sa partie (5) en forme de triangle qui augmente suivant la direction de détection de coordonnées.

3. Système suivant la revendication 1 ou 2, dans lequel les parties rectangulaires comportant lesdites m lignes (12, 13, 14) de détection ont une largeur d, et dans lequel il y a un interstice égal entre des lignes de détection adjacentes.

4. Système suivant la revendication 3, dans lequel des lignes adjacentes des m lignes de détection (12, 13, 14) sont décalées les unes des autres d'un pas p, où p < d.

5. Système suivant l'une quelconque des revendications 1 à 4, comportant en outre des moyens (4, 15, 27) destinés à sélectionner l'une des lignes de détection et/ou les lignes de détection supplémentaires et à faire passer le signal induit sur la ligne de détection sélectionnée vers les moyens (16, 17, 59, 60) de calcul.

6. Système suivant l'une quelconque des revendications précédentes, dans lequel il est prévu des moyens de calcul pour chaque ligne de détection.

7. Système suivant l'une quelconque des revendications précédentes, dans lequel la tête (21) comporte un indicateur de coordonnées qui a en son sein une bobine (21).

8. Système suivant l'une quelconque des revendications précédentes, dans lequel chacune des m lignes de détection de retour rectangulaires, qui forme un groupe de lignes de conducteur disposées parallèlement les unes aux autres suivant un intervalle égal dans une direction de détection de coordonnées et retourné et connecté dans une forme rectangulaire, est disposée avec un interstice égal à 2n/m, 0 ≤ n ≤ m, de l'intervalle du groupe de lignes de conducteur qui constitue une ligne de détection.
